# EUROPÄISCHE PATENTSCHRIFT

(11) **EP 3 252 550 B1**
(45) Veröffentlichungstag und Bekanntmachung des Hinweises auf die Patenterteilung: **19.02.2020**
(21) Anmeldenummer: 16172472.9
(22) Anmeldetag: 01.06.2016
(51) Int. Cl.: G05B 19/042, G05B 9/02

(54) **MODULARE SICHERHEITS-STEUERUNGSEINRICHTUNG MIT KRYPTOGRAFISCHER FUNKTIONALITÄT**
MODULAR SECURITY CONTROL DEVICE WITH CRYPTOGRAPHIC FUNCTIONALITY
DISPOSITIF DE COMMANDE DE SECURITE MODULAIRE AVEC FONCTION CRYPTOGRAPHIQUE

(43) Veröffentlichungstag der Anmeldung: 06.12.2017
(73) Patentinhaber: Siemens Aktiengesellschaft, 80333 München (DE)
(72) Erfinder: Aschauer, Hans, 81829 München (DE); Falk, Rainer, 85586 Poing (DE); Fischer, Kai, 85598 Baldham (DE); Fries, Steffen, 85598 Baldham (DE); Heintel, Markus, 81377 München (DE); Huber, Anton Sebastian, 90429 Nürnberg (DE); Klasen, Wolfgang, 85521 Ottobrunn (DE); Koppers, Joachim, 91301 Forchheim (DE); Pfau, Axel, 80333 München (DE); Quendt, Bernhard, 90537 Feucht (DE); Sperl, Franz, 92526 Oberviechtach (DE); Trummer, Georg, 92224 Amberg (DE); Zwanzger, Johannes, 85579 Neubiberg (DE)

(56) Entgegenhaltungen:
- DE-A1-102010 011 657
- DE-A1-102011 081 803
- DE-A1-102013 213 177

## Beschreibung

Die Erfindung betrifft eine modulare Sicherheits-Steuerungseinrichtung zur Steuerung eines Geräts oder einer Anlage, wobei die modulare Sicherheits-Steuerungseinrichtung ein Steuerungs-Grundgerät sowie ein Sicherheitsmodul umfasst, wobei das Sicherheitsmodul vermittels einer Datenverbindung über eine Datenschnittstelle mit dem Steuerungs-Grundgerät verbunden ist.

Derartige Sicherheits-Steuerungseinrichtungen sind aus dem Stand der Technik bekannt. So offenbart beispielsweise die europäische Patentanmeldung EP 2 506 100 A2 ein Schnittstellenmodul für eine modulare speicherprogrammierbare Steuerung, wobei das Schnittstellenmodul eine sogenannte "Firewall" zur Überwachung eines durch das Schnittstellenmodul hindurchgehenden Datenverkehrs aufweist.

Weiterhin offenbart die deutsche Offenlegungsschrift DE 102013213177A1 eine sicherheitskritische Steuereinrichtung und eine gesicherte Kommunikationseinrichtung für ein Fahrzeug, wobei die gesicherte Kommunikationseinrichtung eine kryptografische Funktionseinheit, die beispielsweise als eine Chipkarte ausgebildet sein kann, umfasst.

Die deutsche Offenlegungsschrift DE 102010011657A1 offenbart ein Steuerungsgerät, welches zur Durchführung einer Sicherheitsfunktion einen kryptografischen Schlüssel beispielsweise von einer mit dem Steuerungsgerät verbundenen Schlüsselbereitstellungsvorrichtung erhalten kann.

Die deutsche Offenlegungsschrift DE 102011081803A1 offenbart ein Automatisierungsgerät, welches mit einem Datennetzwerk verbunden ist, welches weiterhin einen Authentisierungs-Server umfasst, welcher zur Durchführung einer Geräte-Authentisierung und Zugangskontrolle von Automatisierungsgeräten genützt wird.

Ausgehend vom Stand der Technik ist es eine Aufgabe der vorliegenden Erfindung, eine Steuerungseinrichtung mit verbesserten Sicherheits-Eigenschaften zur Verfügung zu stellen.

Der Begriff "Sicherheit" bezieht sich im Rahmen der vorliegenden Beschreibung im Wesentlichen auf die Sicherheit, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört zum Begriff "Sicherheit", wie er im Rahmen der vorliegenden Beschreibung verwendet wird.

Die vorstehend genannte Aufgabe wird gelöst von einer modularen Sicherheits-Steuerungseinrichtung mit den Merkmalen des Patentanspruchs 1.

Eine derartige modulare Sicherheits-Steuerungseinrichtung ist zur Steuerung eines Geräts oder einer Anlage ausgebildet und eingerichtet und umfasst ein Steuerungs-Grundgerät, wobei das Steuerungs-Grundgerät derart ausgebildet und eingerichtet ist, dass vermittels des Ablaufs eines Steuerungsprogramms im Steuerungs-Grundgerät ein mit dem Steuerungs-Grundgerät verbindbares oder verbundenes Gerät, oder eine damit verbindbare oder verbundene Anlage, steuerbar ist oder gesteuert wird. Weiterhin umfasst die modulare Sicherheits-Steuerungseinrichtung ein Sicherheitsmodul, welches zur Bereitstellung oder Ausführung einer kryptografischen Funktionalität für das Steuerungs-Grundgerät ausgebildet und eingerichtet ist. Dabei ist das Sicherheitsmodul vermittels einer Datenverbindung über eine Datenschnittstelle mit dem Steuerungs-Grundgerät verbunden. Das Steuerungs-Grundgerät ist zum Zusammenwirken mit dem Sicherheitsmodul zum Erreichen einer Sicherheitsfunktion der Sicherheits-Steuereinrichtung und zur Abfrage einer Identität und/oder Authentizität des Sicherheitsmoduls ausgebildet und eingerichtet.

Eine derartige modulare Sicherheits-Steuerungseinrichtung bietet eine verbesserte Möglichkeit beispielsweise zur Daten- oder Kommunikations-Sicherheit einer derartigen Steuerungseinrichtung, da über das zusätzliche Sicherheitsmodul beispielsweise die Möglichkeit besteht, eigene oder fremd entwickelte Sicherheits-Kryptomodule oder ähnliche Module zur Verbesserung der Sicherheitseigenschaften der Steuerungseinrichtung hinzuzufügen. Durch das Zusammenwirken der Funktionalität des Sicherheitsmoduls mit der bereits im Grundgerät implementierten Funktionalität lässt sich so flexibel und gegebenenfalls anwenderspezifisch die Sicherheit einer Steuerungseinrichtung verbessern und spezifisch und flexibel anpassen.

Weiterhin kann ein Nutzer auf diese Weise z.B. auch durch eine eigenständige Implementierung und/oder ein eigenes Einbringen der Sicherheitsfunktionalität im Rahmen der modularen Komponente die Vertrauenswürdigkeit der Sicherheitsfunktionalität erhöhen, da er so die hohe Vertrauenswürdigkeit der eigenen kontrollierbaren Umgebung ausnutzen kann und weniger bzw. nicht von der Vertrauenswürdigkeit Dritter abhängig ist.

Die genannte Abfrage von Identitäts- und/oder Authentizitäts-Informationen ermöglicht z.B. eine Prüfung, ob nur zur entsprechenden Verwendung vorgesehene Komponenten eingesetzt werden bzw. werden können, was die Sicherheits-Eigenschaften der Steuerungseinrichtung noch weiter verbessert.

Die Sicherheits-Steuerungseinrichtung kann beispielsweise als ein Automatisierungssystem, ein "Controller", eine speicherprogrammierbare Steuerung (eine sogenannte "SPS" oder "PLC"), ein Industrie-PC (ein sogenannter "IPC"), ein Computer, gegebenenfalls inklusive eines Echtzeit-Systems, eine modulare speicherprogrammierbare Steuerung oder eine ähnliche Steuerungseinrichtung ausgebildet und eingerichtet sein.

Die vermittels der Sicherheits-Steuereinrichtung steuerbare Anlage beziehungsweise das steuerbare Gerät kann beispielsweise als eine Produktionsanlage, eine Werkzeugmaschine, ein Roboter, ein autonomes Transportsystem und/oder eine ähnliche Einrichtung, Vorrichtung oder Anlage ausgebildet und eingerichtet sein. Beispielsweise kann das Gerät beziehungsweise die Anlage für die Fertigungsindustrie, die Prozessindustrie, die Gebäudeautomatisierung und/oder auch die Energieerzeugung und -verteilung, für ein Verkehrssicherungssystem und/oder eine Verkehrssteuerung ausgebildet oder vorgesehen sein.

Das Steuerungs-Grundgerät kann beispielsweise einem Steuerungsgerät beziehungsweise einem Controller ohne oder mit teilweiser Sicherheitsfunktionalität oder auch vollständiger Sicherheitsfunktion entsprechen. Ein solches Steuerungsgerät kann beispielsweise als Zentraleinheit einer speicherprogrammierbaren Steuerung, als speicherprogrammierbare Steuerung, als Industrie PC, als PC oder ähnliche Einrichtung ausgebildet und eingerichtet sein.

Dabei kann das Steuerungs-Grundgerät beispielsweise ein Echtzeit-Betriebssystem umfassen, welches eine Echtzeit-Steuerung eines mit dem Grundgerät verbundenen oder verbindbaren Geräts beziehungsweise einer damit verbundenen oder verbindbaren Anlage ermöglicht.

Das Steuerungs-Grundgerät und/oder das Sicherheitsmodul können beispielsweise ein Gehäuse umfassen. Das Gehäuse kann derart ausgebildet sein, dass das Steuerungs-Grundgerät und/oder das Sicherheitsmodul vor Umwelteinflüssen geschützt werden. Beispielsweise können derartige Gehäuse gemäß der "International Protection"-Klassifikation gemäß DIN 60529, DIN 40050-9 und/oder ISO 20653 ausgebildet und eingerichtet sein, z.B. gemäß den Klassen IP65 oder IP67.

Unter einer kryptografischen Funktionalität wird allgemein beispielsweise eine Funktion zur Verschlüsselung, zum Schutz der Vertraulichkeit, zum Integritätsschutz und/oder zur Authentifikation von Daten (z.B. Nutzerdaten, Steuerdaten, Konfigurationsdaten oder administrative Daten) verstanden. Die kryptografische Funktionalität des Sicherheitsmoduls kann dabei beispielsweise eine oder mehrere der nachfolgend aufgeführten Funktionalitäten umfassen:
- Schlüsselspeicherung
- System- und/oder Nutzer-Authentisierung
- Attestierung
- Verschlüsselung
- Entschlüsselung
- Berechnen einer kryptografischen Prüfsumme (z.B. Signatur)
- Prüfen einer kryptografischen Prüfsumme (z.B. Signatur)
- Schlüsselvereinbarung
- Schlüsselerzeugung
- Erzeugen von Zufallszahlen (z.B. Seed-Generierung)
- Lizenzierung
- Unterstützung von systemischen Überwachungsfunktionen (z.B. tamper-Schutz, Systemintegrität, SIEM)
- Überwachen oder Überwachung von Daten
- Validierung von Daten
- Filterung von Daten

Die aufgezählten kryptografischen Funktionalitäten können dabei jeweils wieder mit verschiedenen Verfahren oder Kombinationen von Verfahren ausgeführt sein.

Die Datenschnittstelle zwischen dem Sicherheitsmodul und dem Steuerungs-Grundgerät kann beispielsweise eine drahtgebundene oder drahtlose Schnittstelle sein. Dabei kann die Datenverbindung über eine drahtgebundene Schnittstelle beispielsweise über eine Kombination von entsprechend komplementären Steckverbinder-Komponenten oder auch über entsprechende Kontaktflächen oder -stifte erfolgen. Dabei kann die Datenschnittstelle als eine serielle oder parallele Datenschnittstelle ausgebildet und eingerichtet sein. Weiterhin kann die Datenschnittstelle zwischen Sicherheitsmodul und Steuerungs-Grundgerät auch als Drahtlos-Schnittstelle, z.B. eine WLAN-, eine Bluetooth- oder eine NFC-Schnittstelle (NFC: Near Field Communication) ausgebildet und eingerichtet sein.

Die Abfrage einer Identität und/oder Authentizität des Sicherheitsmoduls kann beispielsweise die Abfrage einer Informationen bezüglich eines Modells, eines Herstellers, eines Autors, eines oder mehrerer implementierter oder implementierbarer Krypto-Verfahren und/oder - Funktionalitäten, eine Versions-Information, ein Firmware-Stand oder ähnliche Informationen, beziehungsweise die Abfrage von deren Authentizität, umfassen. Weiterhin kann die Abfrage einer Identität und/oder Authentizität des Sicherheitsmoduls beispielsweise die Abfrage von Identitäts-Informationen, wie beispielsweise einer Typ-Information, einer Modell-Identifikation, einer Identifikations-Nummer oder -Kennung oder Ähnlichem, und/oder der Authentizität solcher Informationen umfassen.

Weiterhin kann das Sicherheitsmodul zudem auch mechanisch mit dem Steuerungs-Grundgerät verbunden sein, insbesondere lösbar mit dem Steuerungs-Grundgerät verbunden sein. Derartige Verbindungen können beispielsweise über entsprechende Verrastungen, Verklemmungen, Verschraubungen oder beliebige Kombinationen davon erfolgen.

Zudem kann vorgesehen sein, dass die Energieversorgung des Sicherheitsmoduls über das Steuerungs-Grundgerät erfolgt, beispielsweise über die Datenschnittstelle oder auch über eine gesonderte Schnittstelle zur Energieversorgung. Die Energieversorgung des Sicherheitsmoduls kann auch über eine gesonderte Zuführung erfolgen. Das Sicherheitsmodul kann auch eine eigene Energiequelle umfassen, wie beispielsweise eine Batterie, ein wiederaufladbarerer Akku, ein Kondensator und/oder eine vergleichbare Energiequelle.

Die Sicherheitsfunktion der Sicherheits-Steuereinrichtung kann beispielsweise jede Funktion zur Verschlüsselung, zum Schutz der Vertraulichkeit, zum Integritätsschutz, zur Authentifikation von Daten und/oder Ähnlichem bestehen. Daten können dabei z.B. Nutzerdaten, Steuerdaten, Konfigurationsdaten und/oder administrative Daten sein.

Dabei wird die jeweilige Sicherheitsfunktion der Sicherheits-Steuereinrichtung durch ein Zusammenwirken von Steuerungs-Grundgerät und Sicherheitsmodul erreicht. Ein solches Zusammenwirken kann beispielsweise die Abfrage von Sicherheitsfunktionalitäten durch das Steuerungs-Grundgerät, z.B. das Auslesen eines Schlüssels oder Abfragen eines entsprechenden Prüf-Ergebnisses bestehen. Weiterhin kann das Zusammenwirken auch aus einer Kombination eines im Steuerungs-Grundgerät bereits vorgesehenen Sicherheits- oder kryptografischen-Verfahrens mit der kryptografischen Funktionalität des Sicherheitsmoduls bestehen.

Ganz allgemein wird unter dem Zusammenwirken von Sicherheitsmodul und Steuerungs-Grundgerät zum Erreichen der Sicherheitsfunktion ein Vorgehen verstanden, bei welchem beide der genannten Komponenten mitwirken. Dabei kann eine Mitwirkung im Rahmen des genannten Zusammenwirkens auch schon aus einem Abfragen oder Übertragen einer Information bestehen. Alternativ kann eine Mitwirkung im Rahmen des genannten Zusammenwirkens auch derart ausgestaltet sein, dass sowohl das Steuerungs-Grundgerät als auch das Sicherheitsmodul einen bezüglich des Sicherheits-Aspektes funktionalen Beitrag zum Erreichen der Sicherheitsfunktion der Sicherheits-Steuereinrichtung leisten.

Weiterhin kann zum Erreichen der Sicherheitsfunktion vorgesehen sein, dass weitere Komponenten mit dem Steuerungs-Grundgerät und/oder dem Sicherheitsmodul zusammenwirken. Derartige Komponenten können beispielsweise ein oder mehrere weitere Sicherheitsmodule oder auch ein oder mehrere weitere Applikationen im Steuerungs-Grundgerät oder einem externen Gerät zum Erreichen der Sicherheitsfunktion sein.

In einer vorteilhaften Ausgestaltung ist das Sicherheitsmodul lösbar mit dem Steuerungs-Grundgerät verbunden. Auf diese Weise werden die Sicherheitseigenschaften der Sicherheits-Steuerungseinrichtung weiter verbessert, da durch ein lösbar mit dem Steuerungs-Grundgerät verbundenes Sicherheitsmodul das Austauschen eines solchen Sicherheitsmoduls gegen ein weiteres Sicherheitsmodul ermöglicht wird. So lassen sich z.B. Sicherheitseigenschaften der Sicherheits-Steuerungseinrichtung flexibel ändern und/oder anpassen, um das Gerät beispielsweise an veränderte Randbedingungen anzupassen oder auch neue, u.U. verbesserte Sicherheitsverfahren zu implementieren.

Unter einer lösbaren Verbindung wird in diesem Zusammenhang eine solche verstanden, welche während eines normalen, fachüblichen Gebrauchs der Sicherheits-Steuereinrichtung fixiert bleibt, und nur bei Ergreifung spezieller Maßnahmen zur Lösung der Verbindung oder unüblicher Gewalt gelöst wird. Eine solche lösbare Verbindung kann beispielsweise unter Anderem eine lösbare mechanische Verbindung des Sicherheitsmoduls mit dem Steuerungs-Grundgerät sein, welche z.B. als Verrastung, Verschraubung oder Ähnliches ausgebildet sein kann. Weiterhin kann bei einer drahtgebundenen Datenschnittstelle zwischen Sicherheitsmodul und Steuerungs-Grundgerät eine lösbare Verbindung zwischen diesen Komponenten eine Verbindung mittels entsprechender Steck-Elemente und/oder Kontakt-Elemente zum Herstellen und Lösen einer entsprechenden Datenverbindung umfassen. Eine derartige drahtgebundene Datenverbindung kann beispielsweise über spezielle Sicherheitsmaßnahmen, wie beispielsweise eine zusätzliche Verrastung oder Verschraubung noch zusätzlich gesichert sein.

Das Steuerungs-Grundgerät kann derart ausgebildet und eingerichtet sein, dass bei einem gelösten Sicherheitsmodul das Steuerungs-Grundgerät mit einer Grundgeräte-Funktionalität betreibbar ist oder betrieben wird. Dabei wird unter einem gelösten Sicherheitsmodul ein solches verstanden, welches zumindest keine Kommunikationsverbindung mehr mit dem Steuerungs-Grundgerät aufweist.

Auf diese Weise wird die Sicherheitsfunktionalität der Sicherheits-Steuerungseinrichtung weiter flexibilisiert, indem, beispielsweise in einer vertrauenswürdigen Umgebung, eine Grundgeräte-Funktionalität auch ohne zusätzliches Sicherheitsmodul zur Verfügung steht.

Dabei kann eine Grundgeräte-Funktionalität beispielsweise die vollständige Funktionalität eines Controllers oder einer speicherprogrammierbaren Steuerung, beispielsweise auch einer Zentraleinheit einer speicherprogrammierbaren Steuerung, umfassen. Weiterhin kann die Grundgeräte-Funktionalität auch bereits eingeschränkte Sicherheitsfunktionen oder auch vollständige Sicherheitsfunktionen umfassen. Die Grundgeräte-Funktionalität kann beispielsweise derart vorgesehen sein, dass dadurch zumindest eine Steuerung der zu steuernden Anlage beziehungsweise des zu steuernden Geräts in einem herkömmlichen Umfang sichergestellt ist.

Weiterhin kann das Steuerungs-Grundgerät zum Zusammenwirken mit einem gegen das Sicherheitsmodul austauschbaren zweiten Sicherheitsmodul mit einer zweiten kryptografischen Funktionalität zum Erreichen der Sicherheitsfunktion und/oder einer weiteren Sicherheitsfunktion der Sicherheits-Steuereinrichtung ausgebildet und eingerichtet sein. Auf diese Weise werden die Sicherheitseigenschaften der Sicherheits-Steuerungseinrichtungen weiter verbessert, indem z.B. die Verwendung verschiedener Sicherheitstechnologien flexibel ermöglicht wird oder auch ein Sicherheitsmodul einfach ausgetauscht bzw. auch durch ein verbessertes ersetzt werden kann.

Dabei kann das zweite Sicherheitsmodul entsprechend einem Sicherheitsmodul gemäß der vorliegenden Beschreibung ausgebildet und eingerichtet sein. Insbesondere kann es in Form und Schnittstellen-Geometrie derart ausgebildet sein, dass es anstelle des Sicherheitsmoduls mit dem Steuerungs-Grundgerät verbunden und/oder an oder in diesem angebracht oder eingebracht werden kann.

Die Verbindung des zweiten Sicherheitsmoduls mit dem Steuerungs-Grundgerät kann wiederum über die Datenschnittstelle oder auch eine weitere Datenschnittstelle erfolgen. Dabei kann die kryptografische Funktionalität des zweiten Sicherheitsmoduls vergleichbar mit der des Sicherheitsmoduls ausgebildet sein und beispielsweise wiederum zum Erreichen der Sicherheitsfunktion der Sicherheits-Steuerungseinrichtung führen. Weiterhin kann die zweite kryptografische Funktionalität auch derart verschieden von der kryptografischen Funktionalität des Sicherheitsmoduls sein, dass sich eine von der Sicherheitsfunktion verschiedene weitere Sicherheitsfunktion der Sicherheits-Steuereinrichtung ergibt beziehungsweis eine solche weitere Sicherheitsfunktion möglich wird.

Das Steuerungs-Grundgerät kann beispielsweise ein Gehäuse umfassen, wobei im Gehäuse eine Ausnehmung zur zumindest teilweisen Aufnahme des Sicherheitsmoduls ausgebildet und eingerichtet ist. Weiterhin ist im Steuerungs-Grundgerät ein Schnittstellen-Verbindungselement für die Datenschnittstelle derart vorgesehen, dass beim in der Ausnehmung aufgenommenen Sicherheitsmodul ein Datenaustausch zwischen Steuerungs-Grundgerät und Sicherheitsmodul erfolgt oder erfolgen kann. Auf diese Weise wird die Handhabung, und insbesondere eine sichere Handhabung, der Sicherheits-Steuerungseinrichtung erleichtert, da so eine versehentliche Fehlbedienung des Sicherheitsmoduls beziehungsweise der gesamten Steuerungseinrichtung erschwert wird. Dabei kann das Gehäuse bereits wie vorstehen beschrieben ausgebildet und eingerichtet sein, beispielsweise gemäß einer "International Protection"-Klassifikation.

Die Ausnehmung kann beispielsweise als eine Öffnung im Gehäuse oder ein entsprechender Schacht zur teilweisen Aufnahme oder auch gesamten Aufnahme des Sicherheitsmoduls ausgebildet und eingerichtet sein. Insbesondere kann weiterhin insbesondere eine Abdeckung vorgesehen sein, welche das Sicherheitsmodul oder/und die entsprechenden Schnittstellenelemente vor Umgebungseinflüssen und/oder auch Fehlbedienung und versehentlichem Herausnehmen oder Beschädigen schützt. Weiterhin kann die Ausnehmung auch zur Aufnahme von mehreren entsprechenden Sicherheitsmodulen ausgebildet und eingerichtet sein. Schnittstellen-Verbindungselemente können beispielsweise als entsprechende Steckverbinder-Elemente, Kontakt-Elemente oder auch Antennen für eine Drahtlos-Schnittstelle ausgebildet sein.

Bei der Sicherheits-Steuerungseinrichtung kann eine Sicherung derart vorgesehen und eingerichtet sein, dass in einem gesicherten Zustand der Sicherheits-Steuerungseinrichtung eine Auftrennung und/oder ein Abhören der Datenverbindung zwischen Steuerungs-Grundgerät und Sicherheitsmodul verhindert oder erschwert wird, insbesondere, dass in dem gesicherten Zustand das Sicherheitsmodul weiterhin relativ zum Steuerungs-Grundgerät fixiert ist.

Durch eine derartige Sicherung werden die Sicherheitseigenschaften der Sicherheits-Steuerungseinrichtung weiter verbessert, da auf diese Weise ein Stören der Sicherheitsfunktionalität, beispielsweise durch ein Trennen der Datenverbindung zwischen Steuerungs-Grundgerät und Sicherheitsmodul, verhindert oder erschwert wird. Eine derartige Sicherung kann beispielsweise eine mechanische Sicherung umfassen, z.B. eine Verriegelung, eine Verrastung, eine Verschraubung, eine Schrauben-Sicherung, ein mechanisches Schloss, eine Versiegelung, eine Verplombung oder Ähnliches. Dabei kann beispielsweise das gesamte Sicherheitsmodul entsprechend mit dem Steuerungs-Grundgerät gesichert werden. Weiterhin kann auch eine Auftrennung der Datenverbindung zwischen Sicherheitsmodul und Steuerungs-Grundgerät entsprechend gesichert sein.

Eine Sicherung kann weiterhin auch derart ausgebildet und eingerichtet sein, dass ein Abhören oder Abgreifen von Informationen aus dem Sicherheitsmodul, aus dem Steuerungs-Grundgerät oder aus dem Bereich der Datenverbindung zwischen Sicherheitsmodul und Steuerungs-Grundgerät verhindert oder erschwert wird, z.B.durch entsprechende, beispielsweise mechanische, elektrische und/oder datentechnische Maßnahmen. Derartige mechanische Sicherungen können beispielsweise entsprechende Abschirmungen, Ummantelungen oder sonstige mechanische Schutzmaßnahmen sein. Entsprechende elektrische Sicherungen können beispielsweise Sensoren oder entsprechende Sicherungsschalter umfassen, welche eine elektrische Kontaktierung der genannten Elemente beziehungsweise Verbindungen detektieren und/oder melden können.

Auch dies erhöht die Sicherheitseigenschaften der Sicherheits-Steuerungseinrichtung, da auf diese Weise insbesondere ein illegaler und/oder unauthorisierter Zugriff auf die Sicherheits-Steuerungseinrichtung und insbesondere auch die dort vorgesehenen Sicherheitsmaßnahmen verhindert oder zumindest erschwert werden kann.

Weiterhin kann vorgesehen sein, dass über die Datenschnittstelle Identifikations-Informationen des Sicherheitsmoduls zum Steuerungs-Grundgerät übertragen und im Steuerungs-Grundgerät gespeichert werden. Es kann auch vorgesehen sein, dass über die Datenschnittstelle Identifikations-Informationen des Steuerungs-Grundgeräts zum Sicherheitsmodul übertragen und im Sicherheitsmodul gespeichert werden.

Durch eine Übertragung entsprechender Identifikations-Informationen wird beispielsweise eine Identifikation des jeweils anderen Partners ermöglicht, und so beispielsweise eine Überprüfung einer Identität und/oder Authentizität eines jeweils angeschlossenen Partners. Auf diese Weise kann z.B. sichergestellt werden, dass nur zugelassene, erlaubte, geeignete oder entsprechend authorisierte Sicherheitsmodule beziehungsweise Steuerungs-Grundgeräte mit der jeweils anderen Komponente kombiniert werden beziehungsweise kombinierbar sind. Auch auf diese Weise lassen sich die Sicherheitseigenschaften einer entsprechenden Einrichtung weiter verbessern.

Identifikations-Informationen können dabei Informationen bezüglich eines Modells, eines Herstellers, eines oder mehrerer implementierter oder implementierbarer Krypto-Verfahren und/oder -Funktionalitäten, eine Versions-Information, ein Firmware-Stand oder ähnliche Informationen umfassen. Die Übertragung entsprechender Identifikations-Informationen vom Sicherheitsmodul zum Steuerungs-Grundgerät kann beispielsweise auf Anforderung des Grundgeräts erfolgen. Entsprechend kann die Übertragung entsprechender Identifikations-Informationen vom Steuerungs-Grundgerät zum Sicherheitsmodul beispielsweise auf Anforderung des Sicherheitsmoduls erfolgen. Dies kann beispielsweise im Rahmen eines Authentifizierungsvorgangs bei einem neu verbundenen Sicherheitsmodul oder auch als regelmäßiger Status-Überprüfungs-Authentifizierungsvorgang geschehen.

Die Speicherung der entsprechenden Identifikations-Informationen kann beispielsweise temporär oder auch permanent erfolgen. Beispielsweise kann die Speicherung auch permanent im Rahmen einer entsprechenden Liste oder Datenbank oder eines entsprechenden Audit-Trails erfolgen. Dies ermöglicht es beispielsweise nachzuvollziehen, wann z.B. welche Sicherheitsmodule mit einem entsprechenden Steuerungs-Grundgerät verbunden waren. Auch auf diese Weise lassen sich die Sicherheitseigenschaften einer entsprechenden Steuerungseinrichtung weiter verbessern.

Das Steuerungs-Grundgerät und/oder Sicherheitsmodul können weiterhin derart ausgebildet und eingerichtet sein, dass eine Auftrennung und/oder ein Abhören der Datenverbindung zwischen Steuerungs-Grundgerät und Sicherheitsmodul erkannt, erfasst und/oder protokolliert wird oder werden kann.

Dafür können beispielsweise entsprechende Sensoren oder Prüf-Einrichtungen vorgesehen sein. Wird durch eine solche Prüfeinrichtung beispielsweise erkannt, dass eine Kommunikationsverbindung zwischen Steuerungs-Grundgerät und Sicherheitsmodul unterbrochen oder getrennt ist, so kann dies beispielsweise in einer entsprechenden Datenbank erfasst und protokolliert werden z.B. inklusive eines Zeitpunkts der Erfassung sowie weiteren Informationen. Solche weiteren Informationen können beispielsweise Informationen bezüglich der Steuerung der angeschlossenen Anlage beziehungsweise des angeschlossenen Geräts und einem entsprechenden Geräte- und Maschinenzustand sein. Wird durch eine entsprechende Abhör-Sicherungseinrichtung das Abhören einer Datenverbindung innerhalb des Sicherheitsmoduls, des Steuerungs-Grundgeräts oder zwischen diesen beiden erkannt, so kann dies ebenfalls entsprechend erfasst und z.B. gemeinsam mit einem Erfassungszeitpunkt und weiteren Informationen in einer entsprechenden Liste oder Datenbank protokolliert werden.

Weiterhin kann vorgesehen sein, dass nach einem solchen Erkennen, Erfassung und/oder Protokollieren einer Auftrennung und/oder eine Abhörens der Datenverbindung zwischen Steuerungs-Grundgerät und Sicherheitsmodul eine sicherheitsrelevante Aktion ausgelöst wird.

Dabei kann eine derartige sicherheitsrelevante Aktion beispielsweise jede Aktion sein, die eine Sicherheitsfunktion der modularen Sicherheits-Steuerungseinrichtung betrifft, beispielsweise ein entsprechendes Alarmsignal, eine entsprechende Alarm-Nachricht, ein Löschen von Schlüsseln, eine Sperrung von Funktionalitäten oder weitere vergleichbare und/oder ergänzende Aktionen.

Das Steuerungs-Grundgerät kann auch zur Prüfung einer Identität und/oder einer Authentizität eines über die Datenschnittstelle verbundenen Sicherheitsmoduls ausgebildet und eingerichtet sein, wobei Sicherheits-Grundgerät, Sicherheitsmodul und Datenschnittstelle gemäß der vorliegenden Beschreibung ausgebildet und eingerichtet sein können.

Dabei kann beispielsweise die Abprüfung von Identitäts-Informationen, wie beispielsweise einer Typ-Information, einer Modell-Identifikation, einer Identifikations-Nummer oder -Kennung oder Ähnlichem, und/oder der Authentizität solcher Informationen erfolgen. Weiterhin kann beispielsweise nach erfolgloser Prüfung einer Identität oder Authentizität eine sicherheitsrelevante Aktion gemäß der vorliegenden Beschreibung ausgelöst werden.

Auch das Sicherheitsmodul kann zur Prüfung einer Identität und/oder Authentizität eines über die Datenschnittstelle verbundenen Steuerungs-Grundgeräts gemäß der vorliegenden Beschreibung ausgebildet und eingerichtet sein. Auch hier kann bei misslungener Prüfung der Identität und/oder Authentizität eine entsprechende sicherheitsrelevante Aktion gemäß der vorliegenden Beschreibung veranlasst oder ausgelöst werden.

Auf diese Weise wird eine verbesserte Sicherheit des Systems erreicht, indem durch die genannte Abprüfung von Identitäts- und/oder Authentizitäts-Informationen mit erhöhter Sicherheit nur zur entsprechenden Verwendung vorgesehene Komponenten eingesetzt werden bzw. werden können und so beispielsweise entsprechend vorgesehene Sicherheitsstandards eingehalten werden können.

Das Steuerungs-Grundgerät kann weiterhin beispielsweise einen Datenbus zum Datenaustausch mit einer externen Einrichtung umfassen, wobei die Datenschnittstelle zum Sicherheitsmodul innerhalb des Steuerungs-Grundgeräts derart ausgebildet und angeordnet ist, dass zwischen dem Steuerungs-Grundgerät und der externen Einrichtung über den Datenbus ausgetauschte Daten durch das Sicherheitsmodul hindurchgeführt werden oder hindurchgeführt werden können.

Auf diese Weise können beispielsweise Sicherheitsmodule vorteilhaft verwendet werden, welche z.B. für eine anwenderspezifische oder austauschbare Datenerkennung oder Modifikation, beispielsweise eine Verschlüsselung oder eine sonstige kryptografische Aktionen, eingerichtet sind, wobei diese unmittelbar auf zur externen Einrichtung übertragene oder von dieser kommende Daten anwendbar sind. Auf diese Weise können z.B. flexibel entsprechende Verschlüsselungsmodule in einer entsprechenden Sicherheits-Steuerungseinrichtung implementiert werden.

Externe Einrichtungen können beispielsweise Eingabe- und/oder Ausgabemodule einer speicherprogrammierbaren Steuerung, ein gesteuertes Gerät oder eine gesteuerte Anlage, eine weitere Steuerung, eine Bedieneinrichtung (z.B. ein sogenanntes HMI: "Human Machine Interface"), ein Bedienen- und Beobachten-System (z.B. ein sogenanntes "SCADA"-System), ein Programmiergerät, ein Engineering-System oder ähnliche Systeme sein. Auf diese Weise lässt sich beispielsweise die Kommunikation mit derartigen Systemen sicherer gestalten und weiterhin auch der Grad und die Methode der angewendeten Sicherheitsverfahren flexibel an die Systeme und bestimmte Umwelt oder Umgebungsbedingungen anpassen.

Dabei kann das Steuerungs-Grundgerät einen Datenbus oder auch mehrere Datenbusse umfassen. Es kann weiterhin vorgesehen sein, dass die Kommunikation nur eines Datenbusses, mehrerer der Datenbusse oder auch aller Datenbusse eines entsprechenden Steuerungs-Grundgeräts über das entsprechende Sicherheitsmodul geführt wird.

Es kann auch vorgesehen sein, dass das Steuerungs-Grundgerät einen Datenbus zum Datenaustausch mit einer externen Einrichtung umfasst, und dass die Datenschnittstelle zum Sicherheitsmodul innerhalb des Steuerungs-Grundgeräts derart ausgebildet und angeordnet ist, dass zwischen dem Steuerungs-Grundgerät und der externen Einrichtung über den Datenbus ausgetauschte Daten nicht durch das Sicherheitsmodul hindurchgeführt werden.

Eine derartige Ausgestaltung eignet sich beispielsweise für Sicherheitsmodule, welche nicht der unmittelbar auf zu übertragene Daten wirkende Sicherheitsmechanismen implementiert haben, sondern entsprechende weitere Sicherheitsmechanismen zur Verfügung stellen. Dies kann beispielsweise eine Funktionalität eines Schlüsselmanagements, der Authentizierung eines Nutzers oder spezieller Daten, die Erzeugung von Zufallszahlen oder Ähnliches umfassen. Weiterhin eignet sich eine derartige Ausgestaltung z.B. auch für Sicherheitsmodule, welche eine eigene Schnittstelle zur Kommunikation mit einer oder mehreren externen Einrichtungen aufweisen.

Auch hier kann vorgesehen sein, dass das Steuerungs-Grundgerät mehrere Datenbusse umfasst, wobei nur ein Datenbus nicht durch das Sicherheitsmodul hindurchgeführt wird, mehrere der Datenbusse nicht durch das Sicherheitsmodul hindurchgeführt werden oder keiner der Datenbusse durch das Sicherheitsmodul hindurchgeführt werden.

So ist es beispielsweise möglich, dass bei zwei im Steuerungs-Grundgerät vorgesehenen Datenbussen einer der Datenbusse durch das Sicherheitsmodul hindurchgeführt wird, während ein anderer Datenbus nicht durch das Sicherheitsmodul hindurchgeführt wird. Auf diese Weise lässt sich beispielsweise eine Kommunikation aus einer gesicherten Umgebung heraus sicherheitstechnisch schützen, beispielsweise verschlüsseln oder überwachen, während eines Kommunikation innerhalb einer gesicherten Zone, beispielsweise über einen Feldbus in einem Automatisierungssystem, ungesichert erfolgen kann.

In einer weiteren vorteilhaften Ausgestaltung kann das Sicherheitsmodul eine eigene externe Modulschnittstelle zur Kommunikation mit einer oder mehreren Externen Einrichtungen umfassen. Über diese Schnittstelle kann das Sicherheitsmodul beispielsweise unmittelbar mit einer oder mehreren anderen Steuerungseinrichtungen, einem oder mehreren Computern (z.B. mit einem Engineering-System oder einem SCADA-System), einem oder mehreren Feldgeräten, einem oder mehreren anderen Sicherheitsmodulen (z.B. gemäß der vorliegenden Beschreibung) verbunden werden oder verbunden sein.

Dabei kann die Schnittstelle beispielsweise als eine Feldbus-Schnittstelle, eine Ethernet-Schnittstelle, eine Internet-Schnittstelle oder als eine vergleichbare Kommunikations-Schnittstelle ausgebildet und eingerichtet sein. Damit wäre es z.B. möglich, eine Sicherheits-Steuerungseinrichtung gemäß der vorliegenden Beschreibung z.B. an vorhandene, unterschiedliche und/oder kundenspezifische Sicherheitsprotokolle auf einer Feldbusschnittstelle eines Automatisierungssystems anzupassen.

Das Steuerungs-Grundgerät kann zudem eine Erkennungseinrichtung umfassen, welche derart ausgebildet und eingerichtet sein kann, dass vermittels der Erkennungseinrichtung feststellbar ist, ob ein Sicherheitsmodul über die Datenschnittstelle mit dem Steuerungs-Grundgerät verbunden ist oder nicht.

Eine solche Erkennungseinrichtung kann beispielsweise als gesonderte Softwareapplikation oder auch Hardware-Baugruppe ausgebildet und eingerichtet sein, oder auch beispielsweise als Teil des Betriebssystems oder einer "Firmware" des Steuerungs-Grundgeräts. Die Erkennungseinrichtung kann auch weiterhin so ausgebildet und eingerichtet sein, dass sie zur Abfrage von Identifikations-Informationen des Sicherheitsmoduls sowie deren Speicherung und gegebenenfalls auch Prüfung eingerichtet und ausgebildet ist. Weiterhin kann sie auch zur Authentifizierung beziehungsweise Authentizitätsprüfung eines angeschlossenen Sicherheitsmoduls ausgebildet und eingerichtet sein.

Diesbezüglich kann weiterhin vorgesehen sein, dass das Steuerungs-Grundgerät derart ausgebildet und eingerichtet ist, dass zumindest eine Funktionalität des Steuerungs-Grundgeräts verhindert wird, wenn durch die Erkennungseinrichtung kein über die Datenschnittstelle verbundenes Sicherheitsmodul erkannt wird. Auf diese Weise kann beispielsweise erreicht werden, dass bestimmte Funktionalitäten des Steuerungs-Grundgeräts nur dann verfügbar sind, wenn ein entsprechendes Sicherheitsmodul mit dem Grundgerät verbunden ist.

Weiterhin kann auch vorgesehen sein, dass wesentliche Teile oder die gesamte Steuerungs-Funktionalität des Steuerungs-Grundgeräts verhindert oder gestoppt werden, wenn durch die Erkennungseinrichtung kein über die Datenschnittstelle verbundenes Sicherheitsmodul erkannt wird.

Das Steuerungs-Grundgerät kann weiterhin derart ausgebildet und eingerichtet sein, dass, wenn durch die Erkennungseinrichtung kein über die Datenschnittstelle verbundenes Sicherheitsmodul erkannt wird, eine im Steuerungs-Grundgerät vorgesehene eigene Grundgeräte-Kryptofunktionalität statt einer kryptografischen Funktionalität eines Sicherheitsmoduls verwendet wird.

Auf diese Weise kann beispielsweise eine sichere Grundfunktionalität des Steuerungs-Grundgeräts oder eine Mindest-Sicherheit dieses Geräts erreicht werden, indem, wenn kein Sicherheitsmodul mit dem Steuerungs-Grundgerät verbunden ist, eine in diesem implementierte eigene Kryptofunktionalität verwendet wird. Dabei kann die eigene Grundgeräte-Kryptofunktionalität entsprechend einer kryptografischen Funktionalität eines Sicherheitsmoduls gemäß der vorliegenden Beschreibung ausgebildet und eingerichtet sein.

Dabei kann ein wie vorstehend erläutert ausgebildetes Steuerungs-Grundgerät weiterhin so ausgestaltet und eingerichtet sein, dass eine kryptografische Funktionalität eines verbundenen Sicherheitsmoduls anstatt der eigenen Grundgeräte-Kryptofunktionalität oder auch in Kombination mit der eigenen Grundgeräte-Kryptofunktionalität verwendet wird, wenn durch die Erkennungseinrichtung ein über die Datenschnittstelle verbundenes Sicherheitsmodul erkannt wird.

Auf diese Weise kann erreicht werden, dass beispielsweise bei einem Verwenden eines Sicherheitsmoduls mit dem Steuerungs-Grundgerät, dann tatsächlich auch die Funktionalität des Sicherheitsmoduls genützt wird. So lässt sich eine entsprechende Sicherheits-Steuerungseinrichtung flexibel einrichten, indem beispielsweise eine im Grundgerät vorgesehene eigene Grundgeräte-Kryptofunktionalität als Basis-Funktionalität vorgesehen ist und über entsprechende Sicherheitsmodule, beispielsweise erweiterte, verbesserte oder zusätzliche Sicherheitsfunktionalitäten hinzugefügt werden können.

In einer weiteren vorteilhaften Ausgestaltung kann vorgesehen sein, dass die modulare Sicherheits-Steuereinrichtung ein weiteres Sicherheitsmodul umfasst, welches zur Bereitstellung oder Ausführung einer weiteren kryptografischen Funktionalität für das Steuerungs-Grundgerät ausgebildet und eingerichtet ist, wobei das weitere Sicherheitsmodul vermittels einer weiteren Datenverbindung über eine weitere Datenschnittstelle mit dem Steuerungs-Grundgerät verbunden ist.

Weiterhin können auch noch zusätzliche Sicherheitsmodule entsprechend dem weiteren Sicherheitsmodul vorgesehen sein.

Das weitere Sicherheitsmodul umfasst z.B. eine weitere kryptografische Funktionalität, welche entsprechend der kryptografischen Funktionalität des Sicherheitsmoduls gemäß der vorliegenden Beschreibung ausgebildet und eingerichtet sein kann. Die weitere kryptografische Funktionalität kann beispielsweise die kryptografische Funktionalität des Sicherheitsmoduls ergänzen oder dem Steuerungs-Grundgerät eine zusätzliche Funktionalität zur Verfügung stellen. Weiterhin kann die weitere kryptografische Funktionalität auch der kryptografischen Funktionalität des Sicherheitsmoduls entsprechen.

Als sich ergänzende kryptografische Funktionalitäten des Sicherheitsmoduls und des weiteren Sicherheitsmoduls kann beispielsweise vorgesehen sein, dass die kryptografische Funktionalität des Sicherheitsmoduls ein Management von Schlüsseln umfasst, während die weitere kryptografische Funktionalität des weiteren Sicherheitsmoduls eine Verschlüsselung von Daten umfasst. Auf diese Weise können die durchaus unterschiedlich zu handhabenden Mechanismen eines Schlüsselmanagements und der eigentlichen Verschlüsselung in zwei verschiedenen, sich ergänzenden Sicherheitsmodulen ausgeführt werden.

Dabei kann das weitere Sicherheitsmodul wiederum entsprechend eines Sicherheitsmoduls gemäß der vorliegenden Beschreibung ausgebildet und eingerichtet sein. Insbesondere kann das weitere Sicherheitsmodul beispielsweise lösbar mit dem Steuerungs-Grundgerät verbunden sein, wobei diese lösbare Verbindung ebenfalls wieder gemäß der vorliegenden Beschreibung ausgebildet sein kann. Weiterhin kann das weitere Sicherheitsmodul auch beispielsweise fest mit dem Steuerungs-Grundgerät verbunden beziehungsweise fest in dieses integriert sein. Das weitere Sicherheitsmodul kann beispielsweise auch als von einem Anwender beziehungsweise Kunden programmierbare oder konfigurierbare Elektronik beziehungsweise "Hardware" vorgesehen sein, z.B. als ein sogenanntes "Field Programmable Gate Array" (FPGA) ausgebildet und eingerichtet sein.

Über ein solches FPGA kann ein Anwender beispielsweise dauerhaft seine eigenen Sicherheits-Mechanismen in einer entsprechenden Sicherheits-Steuereinrichtung implementieren. Auf diese Weise lassen sich die Sicherheitseigenschaften eines derartigen Systems weiter verbessern, da ein Anwender seine eigenen und nur ihm bekannten Sicherheits-Mechanismen verwenden kann und so eine erhöhte Sicherheit eines solchen Systems erreicht werden kann.

Die weitere Datenschnittstelle kann entsprechend einer Datenschnittstelle gemäß der vorliegenden Beschreibung weiter ausgebildet und eingerichtet sein. Insbesondere kann diese wiederum als drahtgebundene und/oder drahtlose Schnittstelle vorgesehen sein. Dabei kann die weitere Datenschnittstelle der Datenschnittstelle zum Sicherheitsmodul entsprechen oder auch als ein anderer Schnittstellen-Typus oder eine andere Schnittstellen-Modifikation ausgebildet sein.

Eine Sicherheits-Steuerungseinrichtung mit einem Sicherheitsmodul und einer weiteren Sicherheitsmodul kann weiterhin derart ausgebildet sein, dass das Steuerungs-Grundgerät zum Zusammenwirken mit dem weiteren Sicherheitsmodul zum Erreichen einer weiteren Sicherheitsfunktion der Sicherheits-Steuerungseinrichtung ausgebildet und eingerichtet ist. Dabei kann die weitere Sicherheitsfunktion entsprechend einer Sicherheitsfunktion gemäß der vorliegenden Beschreibung ausgebildet und eingerichtet sein. Insbesondere kann auch das Zusammenwirken des Steuerungs-Grundgeräts mit dem weiteren Sicherheitsmodul entsprechend dem Zusammenwirken des Steuerungs-Grundgeräts mit dem Sicherheitsmodul gemäß der vorliegenden Beschreibung ausgebildet und eingerichtet sein.

Zudem kann eine Sicherheits-Steuerungseinrichtung mit Sicherheitsmodul und weiteren Sicherheitsmodul auch derart ausgestaltet und eingerichtet sein, dass das weitere Sicherheitsmodul zum unmittelbaren Zusammenwirken mit dem Sicherheitsmodul ausgebildet und eingerichtet ist.

Ein derartiges Zusammenwirken beider Sicherheitsmodule kann beispielsweise über die jeweilige Datenschnittstellen zum Steuerungs-Grundgerät und/oder auch über eine weitere Datenschnittstelle zur unmittelbaren Kommunikation beider Sicherheitsmodule erfolgen.

Auf diese Weise können die Module unmittelbar zusammenwirken und beispielsweise sich ergänzende oder additive Sicherheitsfunktionen gemeinsam realisieren. So kann beispielsweise durch ein solches Zusammenwirken zweier Module der Schutz des Datenaustauschs im Rahmen des Zusammenwirkens z.B. von Authentisierungs-, Integritäts- und/oder Verschlüsselungs-Funktionalitäten erreicht werden.

Eine modulare Sicherheits-Steuerungseinrichtung gemäß der vorliegenden Beschreibung kann weiterhin derart ausgebildet und eingerichtet sein, dass das Sicherheitsmodul als ein von einem Anwender programmierbarer oder konfigurierbarer Elektronikbaustein, insbesondere ein von einem Anwender fest programmierbarer oder konfigurierbarer Elektronikbaustein ausgebildet und eingerichtet ist.

Dabei kann ein derartiger Elektronikbaustein beispielsweise als ein "Hardware"-Element, beispielsweise ein integrierter Schaltkreis, oder auch als eine Elektronikbaugruppe ausgebildet und eingerichtet sein. Beispielsweise kann der Elektronikbaustein als sogenanntes "Field Programmable Gate Array" (FPGA) ausgebildet und eingerichtet sein. Dieser Elektronikbaustein kann beispielsweise fest mit dem Steuerungs-Grundmodul verbunden sein. Weiterhin kann der Elektronikbaustein auch lösbar mit dem Steuerungs-Grundmodul verbunden sein.

Auf diese Weise lässt sich die Sicherheit der Sicherheits-Steuerungseinrichtung weiter verbessern, indem ein Anwender seine eigenen, proprietären Sicherheitsmechanismen in der Steuerungseinrichtung implementieren kann und so ein besonderer Geheimhaltungsschutz der verwendeten Sicherheitsmaßnahmen möglich wird.

Nachfolgend wird die Erfindung beispielhaft mit Bezug auf die beiliegenden Figuren näher erläutert.

Es zeigen:
Fig. 1: Beispielhafte Steuerung mit Sicherheitsmodul zur Steuerung einer Anlage;
Fig. 2: Steuerungseinrichtung gemäß Fig. 1 mit externer Modulschnittstelle des Sicherheitsmoduls;
Fig. 3: Steuerungseinrichtung gemäß Fig. 1 mit modifizierter interner Kommunikation;
Fig. 4: Steuerungseinrichtung gemäß Fig. 1 mit zweitem Sicherheitsmodul;
Fig. 5: Beispielhafter Verfahrensablauf bei der kryptografischen Verarbeitung von Daten.

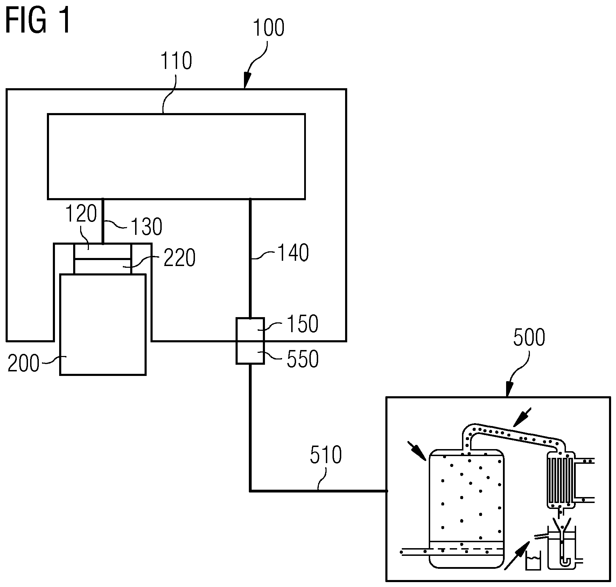

Fig. 1 zeigt eine Steuerung 100 mit einem internen Controller 110 zur Steuerung einer Anlage 500. Die Steuerung 100 stellt dabei ein Beispiel für ein Steuerungs-Grundgerät gemäß der vorliegenden Beschreibung dar. Über einen internen Datenbus 140 und eine I/O-Schnittstelle 150, einen Feldbusanschluss 550 und einen Feldbus 510 steuert ein im Controller 110 ablaufendes Steuerungsprogramm die Anlage 500. Weiterhin umfasst die Steuerung 100 einen Sicherheitsdatenbus 130, über welchen ein Sicherheitsmodul 200 gemäß der vorliegenden Beschreibung mit dem Controller 110 verbunden ist. Die Verbindung erfolgt über ein Steckerelement 120 der Steuerung 100 und ein entsprechendes Gegen-Steckerelement 220 des Sicherheitsmoduls 200.

Das Sicherheitsmodul 200 umfasst beispielsweise einen Schlüssel zur Verschlüsselung von Daten, die vom Controller 110 zur Anlage 500 gesendet werden.

Dabei kann das Sicherheitsmodul 200 beispielsweise Schlüssel enthalten, welche über den Sicherheitsdatenbus 130 an den Controller 110 gesendet werden, um dort zur Verschlüsselung der an die Anlage 500 gesendeten Daten genützt zu werden. Alternativ kann das Sicherheitsmodul 200 auch die Schlüssel und die gesamte Verschlüsselungslogik umfassen, so dass beispielsweise vom Controller 110 an die Anlage 500 zu versendende Daten erst über den Sicherheitsbus 130 an das Sicherheitsmodul gesendet werden, dort verschlüsselt werden, die verschlüsselten Daten zurück über den Sicherheits-Datenbus 130 an den Controller 110 gesendet werden und von dort an die Anlage 500.

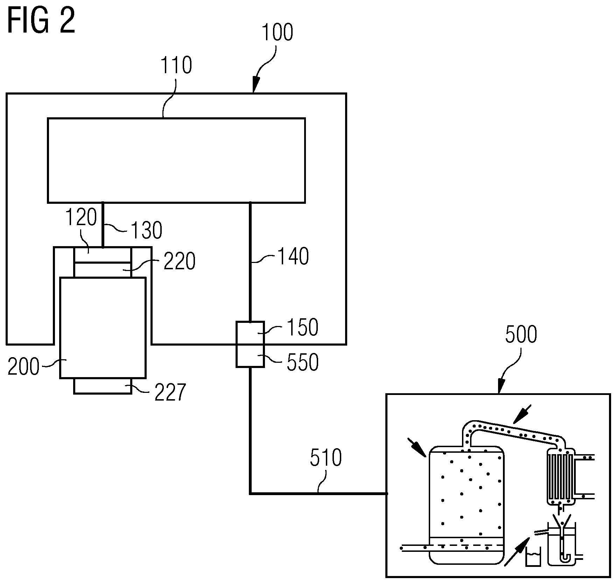

Fig. 2 zeigt die in Figur 1 dargestellte Steuerung, wobei das Sicherheitsmodul 200 in der in Figur 1 dargestellten Ausgestaltung eine zusätzliche externe Kommunikations-Schnittstelle mit einem externen Verbindungselement 227 aufweist, über welches eine unmittelbare Kommunikation mit einer externen Datenverarbeitungseinrichtung möglich ist. Die externe Kommunikations-Schnittstelle des Sicherheitsmoduls 200 kann z.B. als eine Ethernet- oder Internet-Schnittstelle oder auch als Feldbus-Schnittstelle mit einem entsprechend an den Schnittstellentyp angepassten externen Verbindungselement 227 ausgebildet sein. Über diese externe Kommunikations-Schnittstelle des Sicherheitsmoduls 200 kann z.B. das Sicherheitsmodul unmittelbar, oder alternativ auch der Controller 110 über das Sicherheitsmodul 200, mit einer weiteren Steuerung, einem Computer, der Anlage 500 oder auch einem weiteren Sicherheitsmodul gemäß der vorliegenden Beschreibung (z.B. innerhalb einer weiteren Sicherheits-Steuereinrichtung gemäß der vorliegenden Beschreibung) kommunizieren.

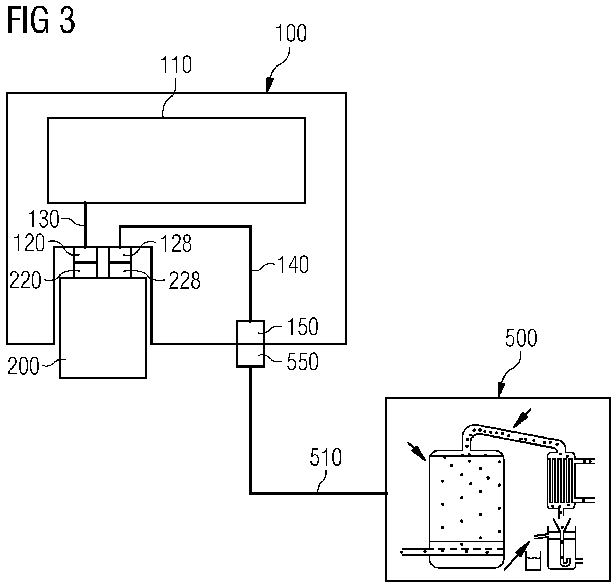

Fig. 3 zeigt eine alternative Ausgestaltung der Steuerung 100, wobei die Steuerung 100 einen zusätzlichen Steckverbinder 128 zur Kontaktierung eines zusätzlichen Gegensteckverbinders 228 des Sicherheitsmoduls 200 umfasst und die Datenverbindung 140 zur I/O-Schnittstelle 150 der Steuerung 100 nun unmittelbar vom zusätzlichen Steckverbinder 128 der Steuerung 100 erfolgt. Mit dieser Ausgestaltung lässt sich beispielsweise die Verschlüsselung von an die Anlage 500 gesendeten Daten einfacher erreichen, indem beispielsweise der Controller 110 die zu versendenden Daten über den Sicherheitsdatenbus 130 an das Sicherheitsmodul 200 sendet, diese dort verschlüsselt werden und vom Sicherheitsmodul über den I/O-Datenbus 140 und den Feldbus 510 dann unmittelbar verschlüsselt zur Anlage 500 versendet werden.

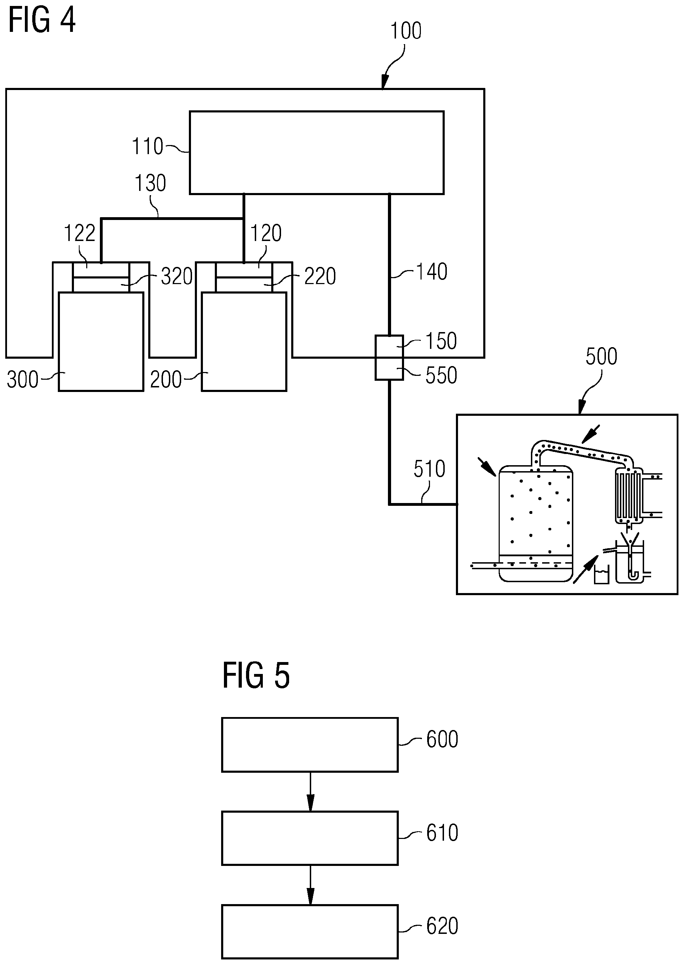

Fig. 4 zeigt eine weitere Ausgestaltungsmöglichkeit der Steuerung 100, bei welcher zusätzlich zum Sicherheitsmodul ein weiteres Sicherheitsmodul 300 über den Sicherheits-Datenbus 130 mit dem Controller 110 verbunden ist. Das weitere Sicherheitsmodul 300 umfasst ein weiteres Gegen-Steckerelement 320, über welches über ein weiteres Steckerelement 122 der Steuerung 100 die Kommunikation des weiteren Sicherheitsmoduls 300 über den Sicherheits-Datenbus 130 erfolgen kann.

Dabei können die Steuerung 100, das Sicherheitsmodul 200 sowie das weitere Sicherheitsmodul 300 derart ausgebildet sein, dass der Controller 110 jeweils mit jedem der Sicherheitsmodul 200, 300 gesondert kommuniziert und jeweils beispielsweise ergänzende Informationen bei den Sicherheitsmodulen 200, 300 abruft beziehungsweise dorthin versendet. Alternativ können die Sicherheitsmodule 200, 300 auch derart ausgebildet sein, dass sie zu Kommunikation untereinander über den Sicherheitsdatenbus 130 befähigt sind.

Auf diese Weise können die Sicherheitsmodule 200, 300 auch unmittelbar interagieren. Das in Fig. 4 dargestellte System kann beispielsweise derart eingerichtet sein, dass das erste Sicherheitsmodul 200 ein Schlüsselmanagement-System umfasst, während das zweite Sicherheitsmodul 300 einen Verschlüsselungsmechanismus selbst umfasst. Bei einem solchen System kann beispielsweise das Schlüsselmanagement zwischen dem Controller 110 und dem ersten Sicherheitsmodul 200 erfolgen und die nachfolgende Verschlüsselung nachher im zweiten Sicherheitsmodul 300. Alternativ kann durch das erste Sicherheitsmodul und das dort implementierte Schlüsselmanagement ein entsprechender Schlüssel über den Sicherheits-Datenbus 130 dem zweiten Sicherheitsmodul 300 zur Verfügung gestellt werden und dort vorhandene Daten beziehungsweise vom Controller 110 an das zweite Sicherheitsmodul 300 übertragene Daten verschlüsselt werden. Diese Daten können dann nachfolgend beispielsweise an die Anlage 500 über den Controller 110 und den Feldbus 510 übertragen werden.

In einer Abwandlung der in Fig. 4 dargestellten Ausgestaltung, kann alternativ ein weiterer Sicherheitsdatenbus vorgesehen sein (nicht in Fig. 4 dargestellt), der exklusiv die beiden Sicherheitsmodule 200, 300, verbindet. Dieser Sicherheitsdatenbus könne entweder als Teil der Steuerung 100 vorhanden sein, oder auch über ein separates Bauteil (z.B. ein Kabel) die beiden Module unmittelbar, z.B. außerhalb des Grundgeräts, verbinden.

Fig. 5 zeigt beispielhaft einen Verschlüsselungsablauf unter Verwendung der in Fig. 1 dargestellten Steuerung 100, wobei der Controller 110 eine eigene interne Kryptofunktionalität gemäß der vorliegenden Beschreibung aufweist. In Fig. 5 erfolgt in einem ersten Verfahrensschritt 600 eine Eingabe von Daten, in einem zweiten Verfahrensschritt 610 erfolgt eine Verarbeitung dieser Daten unter Verwendung der internen Kryptofunktionalität des Controllers 110 sowie der Kryptofunktionalität des Sicherheitsmoduls 200. In einem dritten Verfahrensschritt 620 werden dann diese verarbeiteten Daten ausgegeben.

## Patentansprüche

1. Modulare Sicherheits-Steuerungseinrichtung zur Steuerung eines Geräts (500) oder einer Anlage (500), umfassend:
- ein Steuerungs-Grundgerät (100), wobei das Steuerungs-Grundgerät (100) derart ausgebildet und eingerichtet ist, dass vermittels des Ablaufs eines Steuerungsprogramms im Steuerungs-Grundgerät (100) ein mit dem Steuerungs-Grundgerät verbundenes Gerät (500), oder eine damit verbundene Anlage (500), gesteuert wird, und
- ein Sicherheitsmodul (200, 300), welches zur Bereitstellung oder Ausführung einer kryptographischen Funktionalität für das Steuerungs-Grundgerät (100) ausgebildet und eingerichtet ist,
- wobei das Sicherheitsmodul (200, 300) vermittels einer Datenverbindung über eine Datenschnittstelle mit dem Steuerungs-Grundgerät (100) verbindbar ist,
- wobei das Steuerungs-Grundgerät (100) zum Zusammenwirken mit dem Sicherheitsmodul (200, 300) zum Erreichen einer Sicherheitsfunktion der Sicherheits-Steuereinrichtung ausgebildet und eingerichtet ist, wenn das Sicherheitsmodul mit dem Steuerungs-Grundgerät verbunden ist, und
- wobei das Steuerungs-Grundgerät (100) zur Abfrage einer Identität und/oder Authentizität des Sicherheitsmoduls (200, 300) ausgebildet und eingerichtet ist, wenn das Sicherheitsmodul mit dem Steuerungs-Grundgerät verbunden ist, wobei weiterhin
- das Steuerungs-Grundgerät (100) eine Erkennungseinrichtung umfasst, die derart ausgebildet und eingerichtet ist, dass vermittels der Erkennungseinrichtung feststellbar ist, ob ein Sicherheitsmodul (200, 300) über die Datenschnittstelle mit dem Steuerungsgrundgerät (100) verbunden ist oder nicht, und
- das Steuerungs-Grundgerät (100) derart ausgebildet und eingerichtet ist, dass, wenn durch die Erkennungseinrichtung kein über die Datenschnittstelle verbundenes Sicherheitsmodul (200, 300) erkannt wird, eine im Steuerungs-Grundgerät (100) vorgesehene eigene Grundgeräte-Kryptofunktionalität statt einer kryptographischen Funktionalität eines Sicherheitsmoduls (200, 300) verwendet wird.

2. Modulare Sicherheits-Steuerungseinrichtung gemäß Anspruch 1,
**dadurch gekennzeichnet,**
**dass** das Sicherheitsmodul (200, 300) lösbar mit dem Steuerungs-Grundgerät (100) verbunden ist.

3. Modulare Sicherheits-Steuerungseinrichtung gemäß Anspruch 2,
**dadurch gekennzeichnet,**
**dass** das Steuerungs-Grundgerät (100) bei gelöstem Sicherheitsmodul (200, 300) mit einer Grundgeräte-Funktionalität betreibbar ist oder betrieben wird.

4. Modulare Sicherheits-Steuerungseinrichtung gemäß Anspruch 2 oder 3,
**dadurch gekennzeichnet,**
**dass** das Steuerungs-Grundgerät (100) weiterhin zum Zusammenwirken mit einem gegen das Sicherheitsmodul (200, 300) austauschbaren zweiten Sicherheitsmodul mit einer zweiten kryptographischen Funktionalität zum Erreichen der Sicherheitsfunktion und/oder einer weiteren Sicherheitsfunktion der Sicherheits-Steuereinrichtung ausgebildet und eingerichtet ist.

5. Modulare Sicherheits-Steuerungseinrichtung gemäß einem der vorstehenden Ansprüche,
**dadurch gekennzeichnet,**
**dass** Steuerungs-Grundgerät (100) ein Gehäuse umfasst, wobei im Gehäuse eine Ausnehmung zur zumindest teilweisen Aufnahme des Sicherheitsmoduls (200, 300) ausgebildet und eingerichtet ist, wobei weiterhin im Steuerungs-Grundgerät (100) ein Schnittstellen-Verbindungselement (120) für die Datenschnittstelle derart vorgesehen ist, dass beim in der Ausnehmung aufgenommenen Sicherheitsmodul (200, 300) ein Datenaustausch zwischen Steuerungs-Grundgerät (100) und Sicherheitsmodul (200, 300) erfolgt oder erfolgen kann.

6. Modulare Sicherheits-Steuerungseinrichtung gemäß einem der vorstehenden Ansprüche,
**dadurch gekennzeichnet,**
**dass** eine Sicherung derart vorgesehen und eingerichtet ist, dass in einem gesicherten Zustand der Sicherheits-Steuerungseinrichtung eine Auftrennung und/oder ein Abhören der Datenverbindung zwischen Steuerungs-Grundgerät (100) und Sicherheitsmodul (200, 300) verhindert oder erschwert wird,
insbesondere, dass in dem gesicherten Zustand das Sicherheitsmodul (200, 300) weiterhin relativ zum Steuerungs-Grundgerät (100) fixiert ist.

7. Modulare Sicherheits-Steuerungseinrichtung gemäß einem der vorstehenden Ansprüche,
**dadurch gekennzeichnet,**
**dass** über die Datenschnittstelle Identifikations-Informationen des Sicherheitsmoduls (200, 300) zum Steuerungs-Grundgerät (100) übertragen und im Steuerungs-Grundgerät (100) gespeichert werden,
und/oder
**dass** über die Datenschnittstelle Identifikations-Informationen des Steuerungs-Grundgeräts (100) zum Sicherheitsmodul (200, 300) übertragen und im Sicherheitsmodul (200, 300) gespeichert werden.

8. Modulare Sicherheits-Steuerungseinrichtung gemäß einem der vorstehenden Ansprüche,
**dadurch gekennzeichnet,**
**dass** das Steuerungs-Grundgerät (100) und/oder das Sicherheitsmodul (200, 300) derart ausgebildet und eingerichtet sind, dass eine Auftrennung und/oder ein Abhören der Datenverbindung zwischen Steuerungs-Grundgerät (100) und Sicherheitsmodul (200, 300) erkannt, erfasst und/oder protokolliert wird oder werden kann.

9. Modulare Sicherheits-Steuerungseinrichtung gemäß Anspruch 8,
**dadurch gekennzeichnet,**
**dass** nach einem Erkennen, Erfassen und/oder Protokollieren einer Auftrennung und/oder eines Abhörens der Datenverbindung zwischen Steuerungs-Grundgerät (100) und Sicherheitsmodul (200, 300) eine sicherheitsrelevante Aktion ausgelöst wird.

10. Modulare Sicherheits-Steuerungseinrichtung gemäß einem der vorstehenden Ansprüche,
**dadurch gekennzeichnet,**
**dass** das Steuerungs-Grundgerät (100) zur Prüfung einer Identität und/oder Authentizität eines über die Datenschnittstelle verbundenen Sicherheitsmoduls (200, 300) gemäß einem der vorstehenden Ansprüche ausgebildet und eingerichtet ist.

11. Modulare Sicherheits-Steuerungseinrichtung gemäß einem der vorstehenden Ansprüche,
**dadurch gekennzeichnet,**
**dass** das Sicherheitsmodul (200, 300) zur Prüfung einer Identität und/oder Authentizität eines über die Datenschnittstelle verbundenen Steuerungs-Grundgerät (100) gemäß einem der vorstehenden Ansprüche ausgebildet und eingerichtet ist.

12. Modulare Sicherheits-Steuerungseinrichtung gemäß einem der vorstehenden Ansprüche,
**dadurch gekennzeichnet,**
**dass** das Steuerungs-Grundgerät (100) einen Datenbus (140) zum Datenaustausch mit einer externen Einrichtung (500) umfasst, und dass die Datenschnittstelle zum Sicherheitsmodul (200, 300) innerhalb des Steuerungs-Grundgeräts (100) derart ausgebildet und angeordnet ist, dass zwischen dem Steuerungs-Grundgerät (100) und der externen Einrichtung (500) über den Datenbus (140) ausgetauschte Daten durch das Sicherheitsmodul (200, 300) hindurch geführt werden.

13. Modulare Sicherheits-Steuerungseinrichtung gemäß einem der vorstehenden Ansprüche,
**dadurch gekennzeichnet,**
**dass** das Steuerungs-Grundgerät (100) einen Datenbus (140) zum Datenaustausch mit einer externen Einrichtung (500) umfasst, und dass die Datenschnittstelle zum Sicherheitsmodul (200, 300) innerhalb des Steuerungs-Grundgeräts (100) derart ausgebildet und angeordnet ist, dass zwischen dem Steuerungs-Grundgerät (100) und der externen Einrichtung (500) über den Datenbus (140) ausgetauschte Daten nicht durch das Sicherheitsmodul (200, 300) hindurch geführt werden.

14. Modulare Sicherheits-Steuerungseinrichtung gemäß einem der vorstehenden Ansprüche,
**dadurch gekennzeichnet,**
**dass** das Sicherheitsmodul (200) weiterhin eine externe Modulschnittstelle (227) zur Kommunikation mit einer oder mehreren externen Einrichtungen umfasst.

15. Modulare Sicherheits-Steuerungseinrichtung gemäß einem der vorstehenden Ansprüche,
**dadurch gekennzeichnet,**
**dass** das Steuerungs-Grundgerät (100) weiterhin derart ausgebildet und eingerichtet ist, dass, wenn durch die Erkennungseinrichtung kein über die Datenschnittstelle verbundenes Sicherheitsmodul (200, 300) erkannt wird, zumindest eine Funktionalität des Steuerungs-Grundgeräts (100) verhindert wird.

16. Modulare Sicherheits-Steuerungseinrichtung gemäß einem der vorstehenden Ansprüche,
**dadurch gekennzeichnet,**
**dass** das Steuerungs-Grundgerät (100) weiterhin zur Verwendung einer kryptographische Funktionalität eines verbundenen Sicherheitsmoduls (200, 300) anstatt der eigenen Grundgeräte-Kryptofunktionalität oder in Kombination mit der eigenen Grundgeräte-Kryptofunktionalität ausgebildet und eingerichtet ist, wenn durch die Erkennungseinrichtung ein über die Datenschnittstelle verbundenes Sicherheitsmodul (200, 300) erkannt wird.

17. Modulare Sicherheits-Steuerungseinrichtung gemäß einem der vorstehenden Ansprüche,
**dadurch gekennzeichnet,**
**dass** die modulare Sicherheits-Steuereinrichtung ein weiteres Sicherheitsmodul (200, 300) umfasst, welches zur Bereitstellung oder Ausführung einer weiteren kryptographischen Funktionalität für das Steuerungs-Grundgerät (100) ausgebildet und eingerichtet ist,
wobei das weitere Sicherheitsmodul (200, 300) vermittels einer weiteren Datenverbindung über eine weitere Datenschnittstelle mit dem Steuerungs-Grundgerät (100) verbunden ist.

18. Modulare Sicherheits-Steuerungseinrichtung gemäß einem der vorstehenden Ansprüche,
**dadurch gekennzeichnet,**
**dass** das Steuerungs-Grundgerät (100) zum Zusammenwirken mit dem weiteren Sicherheitsmodul (200, 300) zum Erreichen einer weiteren Sicherheitsfunktion der Sicherheits-Steuerungseinrichtung ausgebildet und eingerichtet ist und/oder
**dass** das weitere Sicherheitsmodul (300) zum unmittelbaren Zusammenwirken mit dem Sicherheitsmodul (200) ausgebildet und eingerichtet ist.

19. Modulare Sicherheits-Steuerungseinrichtung gemäß Anspruch 1,
**dadurch gekennzeichnet,**
**dass** das Sicherheitsmodul (200, 300) als ein von einem Anwender programmierbarer oder konfigurierbarer Elektronikbaustein, insbesondere ein von einem Anwender fest programmierbarer oder konfigurierbarer Elektronikbaustein ausgebildet und eingerichtet ist.

20. Modulare Sicherheits-Steuerungseinrichtung gemäß Anspruch 19,
**dadurch gekennzeichnet,**
**dass** das Sicherheitsmodul (200, 300) und/oder die Sicherheits-Steuereinrichtung gemäß einem der Ansprüche 6 bis 19 ausgebildet und eingerichtet sind.

## Claims

1. Modular security control device for controlling an apparatus (500) or an installation (500), comprising:
- a basic control apparatus (100), the basic control apparatus (100) being designed and set up in such a manner that an apparatus (500) or an installation (500) which is connected to the basic control apparatus is controlled by means of the sequence of a control program in the basic control apparatus (100), and
- a security module (200, 300) which is designed and set up to provide or perform a cryptographic functionality for the basic control apparatus (100),
- the security module (200, 300) being able to be connected to the basic control apparatus (100) by means of a data connection via a data interface,
- the basic control apparatus (100) being designed and set up to interact with the security module (200, 300) in order to achieve a security function of the security control device if the security module is connected to the basic control apparatus, and
- the basic control apparatus (100) being designed and set up to query an identity and/or authenticity of the security module (200, 300) if the security module is connected to the basic control apparatus, furthermore
- the basic control apparatus (100) comprising a detection device which is designed and set up in such a manner that the detection device can be used to determine whether or not a security module (200, 300) is connected to the basic control apparatus (100) via the data interface, and
- the basic control apparatus (100) being designed and set up in such a manner that a separate basic apparatus crypto functionality provided in the basic control apparatus (100) is used instead of a cryptographic functionality of a security module (200, 300) if the detection device does not detect a security module (200, 300) connected via the data interface.

2. Modular security control device according to Claim 1,
**characterized**
**in that** the security module (200, 300) is releasably connected to the basic control apparatus (100).

3. Modular security control device according to Claim 2,
**characterized**
**in that** the basic control apparatus (100) is operated or can be operated with a basic apparatus functionality when the security module (200, 300) is released.

4. Modular security control device according to claim 2 or 3,
**characterized**
**in that** the basic control apparatus (100) is also designed and set up to interact with a second security module which can be exchanged for the security module (200, 300) and has a second cryptographic functionality in order to achieve the security function and/or a further security function of the security control device.

5. Modular security control device according to one of the preceding claims,
**characterized**
**in that** the basic control apparatus (100) comprises a housing, a recess in the housing being designed and set up to at least partially accommodate the security module (200, 300), an interface connection element (120) for the data interface also being provided in the basic control apparatus (100) in such a manner that, when the security module (200, 300) is accommodated in the recess, data are interchanged or can be interchanged between the basic control apparatus (100) and the security module (200, 300) .

6. Modular security control device according to one of the preceding claims,
**characterized**
**in that** a protection means is provided and set up in such a manner that, in a protected state of the security control device, separation and/or wiretapping of the data connection between the basic control apparatus (100) and the security module (200, 300) is/are prevented or impeded,
in particular in that the security module (200, 300) is also fixed relative to the basic control apparatus (100) in the secured state.

7. Modular security control device according to one of the preceding claims,
**characterized**
**in that** identification information relating to the security module (200, 300) is transmitted to the basic control apparatus (100) via the data interface and is stored in the basic control apparatus (100),
and/or
**in that** identification information relating to the basic control apparatus (100) is transmitted to the security module (200, 300) via the data interface and is stored in the security module (200, 300).

8. Modular security control device according to one of the preceding claims,
**characterized**
**in that** the basic control apparatus (100) and/or the security module (200, 300) is/are designed and set up in such a manner that separation and/or wiretapping of the data connection between the basic control apparatus (100) and the security module (200, 300) is/are or can be detected, recorded and/or logged.

9. Modular security control device according to Claim 8,
**characterized**
**in that** a security-relevant action is initiated after separation and/or wiretapping of the data connection between the basic control apparatus (100) and the security module (200, 300) has/have been detected, recorded and/or logged.

10. Modular security control device according to one of the preceding claims,
**characterized**
**in that** the basic control apparatus (100) is designed and set up to check an identity and/or authenticity of a security module (200, 300) according to one of the preceding claims which is connected via the data interface.

11. Modular security control device according to one of the preceding claims,
**characterized**
**in that** the security module (200, 300) is designed and set up to check an identity and/or authenticity of a basic control apparatus (100) according to one of the preceding claims which is connected via the data interface.

12. Modular security control device according to one of the preceding claims,
**characterized**
**in that** the basic control apparatus (100) comprises a data bus (140) for interchanging data with an external device (500), and in that the data interface to the security module (200, 300) inside the basic control apparatus (100) is designed and arranged in such a manner that data interchanged between the basic control apparatus (100) and the external device (500) via the data bus (140) are passed through the security module (200, 300).

13. Modular security control device according to one of the preceding claims,
**characterized**
**in that** the basic control apparatus (100) comprises a data bus (140) for interchanging data with an external device (500), and in that the data interface to the security module (200, 300) inside the basic control apparatus (100) is designed and arranged in such a manner that data interchanged between the basic control apparatus (100) and the external device (500) via the data bus (140) are not passed through the security module (200, 300).

14. Modular security control device according to one of the preceding claims,
**characterized**
**in that** the security module (200) also comprises an external module interface (227) for communicating with one or more external devices.

15. Modular security control device according to one of the preceding claims,
**characterized**
**in that** the basic control apparatus (100) is also designed and set up in such a manner that at least one functionality of the basic control apparatus (100) is prevented if the detection device does not detect a security module (200, 300) connected via the data interface.

16. Modular security control device according to one of the preceding claims,
**characterized**
**in that** the basic control apparatus (100) is also designed and set up to use a cryptographic functionality of a connected security module (200, 300) instead of the separate basic apparatus crypto functionality or in combination with the separate basic apparatus crypto functionality if the detection device detects a security module (200, 300) connected via the data interface.

17. Modular security control device according to one of the preceding claims,
**characterized**
**in that** the modular security control device comprises a further security module (200, 300) which is designed and set up to provide or perform a further cryptographic functionality for the basic control apparatus (100),
the further security module (200, 300) being connected to the basic control apparatus (100) by means of a further data connection via a further data interface.

18. Modular security control device according to one of the preceding claims,
**characterized**
**in that** the basic control apparatus (100) is designed and set up to interact with the further security module (200, 300) in order to achieve a further security function of the security control device, and/or
**in that** the further security module (300) is designed and set up to directly interact with the security module (200) .

19. Modular security control device according to Claim 1,
**characterized**
**in that** the security module (200, 300) is designed and set up as an electronic module which can be programmed or configured by a user, in particular an electronic module which can be permanently programmed or configured by a user.

20. Modular security control device according to Claim 19,
**characterized**
**in that** the security module (200, 300) and/or the security control device is/are designed and set up according to one of claims 6 to 19.

## Revendications

1. Dispositif de commande de sécurité modulaire pour la commande d'un appareil (500) ou d'une installation (500) comprenant :
- un appareil de base de commande (100), l'appareil de base de commande (100) étant conçu et configuré de telle sorte qu'est commandé, par l'intermédiaire du déroulement d'un programme de commande dans l'appareil de base de commande (100), un appareil (500) relié à l'appareil de base de commande ou une installation (500) y reliée et
- un module de sécurité (200,300) qui est conçu et configuré pour fournir ou exécuter une fonctionnalité cryptographique pour l'appareil de base de commande (100),
- le module de sécurité (200, 300) pouvant être relié à l'appareil de base de commande (100) au moyen d'une liaison de données via une interface de données,
- l'appareil de base de commande (100) étant conçu et configuré pour coopérer avec le module de sécurité (200, 300) pour obtenir une fonction de sécurité du dispositif de commande de sécurité lorsque le module de sécurité est relié à l'appareil de base de commande et
- l'appareil de base de commande (100) étant conçu et configuré pour demander une identité et/ou authenticité du module de sécurité (200, 300) lorsque le module de sécurité est relié à l'appareil de base de commande,
- l'appareil de base de commande (100) comprenant en outre un dispositif de détection qui est conçu et configuré de telle sorte qu'il est possible de constater, au moyen du dispositif de détection, si un module de sécurité (200, 300) est relié ou non à l'appareil de base de commande (100) via l'interface de données et
- l'appareil de base de commande (100) étant en outre conçu et configuré de telle sorte que, si aucun module de sécurité (200, 300) relié via l'interface de données n'est détecté par le dispositif de détection, une propre crypto-fonctionnalité d'appareils de base prévue dans l'appareil de base de commande (100) est utilisée au lieu d'une fonctionnalité cryptographique d'un module de sécurité (200, 300).

2. Dispositif de commande de sécurité modulaire selon la revendication 1, **caractérisé en ce que** le module de sécurité (200, 300) est relié de manière détachable à l'appareil de base de commande (100).

3. Dispositif de commande de sécurité modulaire selon la revendication 2, **caractérisé en ce que**, le module de sécurité (200, 300) étant détaché, l'appareil de base de commande (100) peut être ou est exploité avec une fonctionnalité d'appareils de base.

4. Dispositif de commande de sécurité modulaire selon la revendication 2 ou 3, **caractérisé en ce que** l'appareil de base de commande (100) est en outre conçu et configuré pour coopérer avec un deuxième module de sécurité interchangeable avec le module de sécurité (200, 300) et comportant une deuxième fonctionnalité cryptographique pour obtenir la fonction de sécurité et/ou une autre fonction de sécurité du dispositif de commande de sécurité.

5. Dispositif de commande de sécurité modulaire selon l'une des revendications précédentes, **caractérisé en ce que** l'appareil de base de commande (100) comprend un boîtier, dans le boîtier étant conçu et configuré un évidement destiné à recevoir au moins en partie le module de sécurité (200, 300), dans l'appareil de base de commande (100) étant en outre prévu un élément de liaison d'interfaces (120) pour l'interface de données de manière telle que, le module de sécurité (200, 300) étant logé dans l'évidement, un échange de données a ou peut avoir lieu entre l'appareil de base de commande (100) et le module de sécurité (200, 300).

6. Dispositif de commande de sécurité modulaire selon l'une des revendications précédentes, **caractérisé en ce qu'**une sécurité est prévue et configurée de telle sorte que, dans un état sécurisé du dispositif de commande de sécurité, une coupure et/ou une écoute de la liaison de données entre appareil de base de commande (100) et module de sécurité (200, 300) sont empêchées ou rendues difficiles, et plus particulièrement **en ce que**, dans un état sécurisé, le module de sécurité (200, 300) est en outre fixé relativement à l'appareil de base de commande.

7. Dispositif de commande de sécurité modulaire selon l'une des revendications précédentes, **caractérisé en ce que** des informations d'identification du module de sécurité (200, 300) sont transmises à l'appareil de base de commande (100) via l'interface de données et sont sauvegardées dans l'appareil de base de commande (100) et/ou **en ce que** des informations d'identification de l'appareil de base de commande (100) sont transmises au module de sécurité (200, 300) via l'interface de données et sont sauvegardées dans le module de sécurité (200, 300).

8. Dispositif de commande de sécurité modulaire selon l'une des revendications précédentes, **caractérisé en ce que** l'appareil de base de commande (100) et/ou le module de sécurité (200, 300) sont conçus et configurés de telle sorte qu'une coupure et/ou une écoute de la liaison de données entre appareil de base de commande (100) et module de sécurité (200, 300) sont ou peuvent être détectées, saisies et/ou protocolées.

9. Dispositif de commande de sécurité modulaire selon la revendication 8, **caractérisé en ce que**, après la détection, la saisie et/ou la protocolisation d'une coupure et/ou d'une écoute de la liaison de données entre appareil de base de commande (100) et module de sécurité (200, 300), une action de sécurité est déclenchée.

10. Dispositif de commande de sécurité modulaire selon l'une des revendications précédentes, **caractérisé en ce que** l'appareil de base de commande (100) est conçu et configuré selon l'une des revendications précédentes pour vérifier une identité et/ou authenticité d'un module de sécurité (200, 300) relié via l'interface de données.

11. Dispositif de commande de sécurité modulaire selon l'une des revendications précédentes, **caractérisé en ce que** le module de sécurité (200, 300) est conçu et configuré selon l'une des revendications précédentes pour vérifier une identité et/ou authenticité d'un appareil de base de commande (100) relié via l'interface de données.

12. Dispositif de commande de sécurité modulaire selon l'une des revendications précédentes, **caractérisé en ce que** l'appareil de base de commande (100) comprend un bus de données (140) pour l'échange de données avec un dispositif externe (500) et **en ce que** l'interface de données vers le module de sécurité (200, 300) est conçue et agencée de manière telle, dans l'appareil de base de commande (100), que des données échangées via le bus de données (140) entre l'appareil de base de commande (100) et le dispositif externe (500) traversent le module de sécurité (200, 300).

13. Dispositif de commande de sécurité modulaire selon l'une des revendications précédentes, **caractérisé en ce que** l'appareil de base de commande (100) comprend un bus de données (140) pour l'échange de données avec un dispositif externe (500) et **en ce que** l'interface de données vers le module de sécurité (200, 300) est conçue et agencée de manière telle, dans l'appareil de base de commande (100), que des données échangées via le bus de données (140) entre l'appareil de base de commande (100) et le dispositif externe (500) ne traversent pas le module de sécurité (200, 300).

14. Dispositif de commande de sécurité modulaire selon l'une des revendications précédentes, **caractérisé en ce que** le module de sécurité (200) comprend en outre une interface de module externe (227) pour la communication avec un ou plusieurs dispositifs externes.

15. Dispositif de commande de sécurité modulaire selon l'une des revendications précédentes, **caractérisé en ce que** l'appareil de base de commande (100) est en outre conçu et configuré de manière telle que, si aucun module de sécurité (200, 300) relié via l'interface de données n'est détecté par le dispositif de détection, au moins une fonctionnalité de l'appareil de base de commande (100) est empêchée.

16. Dispositif de commande de sécurité modulaire selon l'une des revendications précédentes, **caractérisé en ce que** l'appareil de base de commande (100) est en outre conçu et configuré pour l'utilisation d'une fonctionnalité cryptographique d'un module de sécurité relié (200, 300) au lieu de la propre crypto-fonctionnalité d'appareils de base ou en combinaison avec la propre crypto-fonctionnalité d'appareils de base si un module de sécurité (200, 300) relié via l'interface de données est détecté par le dispositif de détection.

17. Dispositif de commande de sécurité modulaire selon l'une des revendications précédentes, **caractérisé en ce que** le dispositif de commande de sécurité modulaire comprend un autre module de sécurité (200, 300) qui est conçu et configuré pour fournir ou exécuter une autre fonctionnalité cryptographique pour l'appareil de base de commande (100), l'autre module de sécurité (200, 300) étant relié à l'appareil de base de commande (100) au moyen d'une autre liaison de données via une autre interface de données.

18. Dispositif de commande de sécurité modulaire selon l'une des revendications précédentes, **caractérisé en ce que** l'appareil de base de commande (100) est conçu et configuré pour coopérer avec l'autre module de sécurité (200, 300) pour obtenir une autre fonction de sécurité du dispositif de commande de sécurité et/ou **en ce que** l'autre module de sécurité (300) est conçu et configuré pour coopérer directement avec le module de sécurité (200).

19. Dispositif de commande de sécurité modulaire selon la revendication 1, **caractérisé en ce que** le module de sécurité (200, 300) est conçu et configuré en tant que composant électronique programmable ou configurable par un utilisateur, et plus particulièrement en tant que composant électronique programmable ou configurable à demeure par un utilisateur.

20. Dispositif de commande de sécurité modulaire selon la revendication 19, **caractérisé en ce que** le module de sécurité (200, 300) et/ou le dispositif de commande de sécurité sont conçus et configurés selon l'une des revendications 6 à 19.
